# EUROPÄISCHE PATENTANMELDUNG

(11) **EP 2 500 129 A1**
(43) Veröffentlichungstag der Anmeldung: **19.09.2012**
(21) Anmeldenummer: 12155347.3
(22) Anmeldetag: 14.02.2012
(51) Int. Cl.: B23Q 1/26, B23Q 1/52, B23Q 5/56, B23Q 1/70

(54) **Anordnung zur Halterung und Drehung eines zu bearbeitenden Werkstücks**

(30) Priorität: 18.03.2011 DE 102011005791
(71) Anmelder: Kaltenbach & Voigt GmbH, 88400 Biberach (DE)
(72) Erfinder: Gapp, Wolfgang, 88410 Bad Wurzach (DE)
(74) Vertreter: Thun, Clemens

(57) **Zusammenfassung**

Anordnung (1) zur Halterung und Drehung eines zu bearbeitenden Werkstücks (2), mit einer Werkstückachse bzw. -welle (3) mit einer Werkstückaufnahme (4), einem Lagergehäuse (5) in dem zumindest ein Großteil der Werkstückachse bzw. -welle (3) angeordnet ist, einer Antriebseinheit (6) und einer Getriebeeinheit (7), wobei die Werkstückachse bzw. -welle (3) durch die Antriebseinheit (6) über die Getriebeeinheit (7) angetrieben bzw. gedreht werden kann und wobei die Werkstückachse bzw. -welle (3) in dem Lagergehäuse (5) derart vorgespannt ist, dass eine Übertragung eines federnden Verhaltens der Antriebseinheit (6) auf die Werkstückachse bzw. -welle (3) vermieden werden kann.

## Beschreibung

Die vorliegende Erfindung betrifft eine Anordnung zur Halterung und Drehung eines zu bearbeitenden Werkstücks, die eine Werkstückachse bzw. -welle mit einer Werkstückaufnahme, ein Lagergehäuse in dem zumindest ein Großteil der Werkstückachse bzw. -welle angeordnet ist, eine Antriebseinheit und eine Getriebeeinheit aufweist, wobei die Werkstückachse bzw. -welle durch die Antriebseinheit über die Getriebeeinheit angetrieben bzw. gedreht werden kann.

In der Zahnmedizin werden zur Herstellung von Inlays, Onlays, Kronen und anderen sogenannten zahntechnischen Formteilen in der Regel sogenannte Rohlinge bzw. Werkstücke verwendet, welche abtragend bearbeitet werden, um letztendlich das Formteil in der gewünschten Gestalt zu erhalten. Hierbei ist es zumeist erforderlich bzw. erwünscht, dass das Werkstück zumindest um eine Achse gedreht werden kann. Hierfür kann nun beispielsweise eine Werkstückachse bzw. -welle vorgesehen sein, die eine entsprechende Werkstückaufnahme aufweist und beispielsweise durch einen Schrittmotor mithilfe eines Getriebes angetrieben bzw. gedreht wird. Schrittmotoren kommen dabei häufig zum Einsatz, da diese relativ preisgünstig sind. In der Ruhlage (Haltemoment des Schrittmotors) weisen Schrittmotoren jedoch konstruktiv bedingt ein federndes Verhalten auf. Bei der Bearbeitung führt dieses federnde Verhalten nun zu sogenannten Rattermarken auf der Werkstückoberfläche bzw. zu Ausbrüchen bei den Werkstücken und Werkzeugen. Auch wirkt sich jede Schwingung bei der Bearbeitung negativ auf die Standzeit des Werkzeuges aus.

Um nun möglichst schwingungsfrei fräsen, bzw. schleifen zu können kann beispielsweise vorgesehen sein, dass die Werkstückachse bzw. -welle spielfrei gelagert bzw. angetrieben wird. Eine Möglichkeit, einen derartigen spielfreien Antrieb zu ermöglichen, besteht nun darin, ein hochwertiges Getriebe, das spielfrei, bzw. spielarm ist, zu verwenden. Hierbei besteht nun allerdings das Problem, dass derartige Getriebe relativ teuer sind.

Der vorliegenden Erfindung liegt dementsprechend die Aufgabe zugrunde, eine Anordnung zur Halterung und Drehung eines zu bearbeitenden Werkstücks zu entwickeln, bei der vermieden wird, dass das konstruktiv bedingte federnde Verhalten eines Schrittmotors auf die Werkstückachse bzw. -welle übertragen wird.

Die Aufgabe wird durch eine Anordnung zur Halterung und Drehung eines zu bearbeitenden Werkstücks gemäß Anspruch 1 gelöst. Vorteilhafte Weiterbildungen der Erfindung sind Gegenstand der abhängigen Ansprüche.

Erfmdungsgemäß wird die Lagerung der Werkstückachse nun durch einen Reibmoment so stark vorgespannt, dass das Reibmoment höher als das bei der Bearbeitung auftretende Moment ist.

Dementsprechend ist eine Anordnung zur Halterung und Drehung eines zu bearbeitenden Werkstücks vorgesehen, die eine Werkstückachse bzw. -welle mit einer Werkstückaufnahme, ein Lagergehäuse in dem zumindest ein Großteil der Werkstückachse bzw. welle angeordnet ist, eine Antriebseinheit und eine Getriebeeinheit aufweist, wobei die Werkstückachse bzw. -welle durch die Antriebseinheit über die Getriebeeinheit angetrieben bzw. gedreht werden kann. Hierbei ist die Werkstückachse bzw. -welle in dem Lagergehäuse derart vorgespannt, dass eine Übertragung eines federnden Verhaltens der Antriebseinheit auf die Werkstückachse bzw. -welle vermieden werden kann.

Diese Vorspannung kann vorzugsweise durch Federn erfolgen, die die Werkstückachse bzw. -welle an ein in dem Lagergehäuse angeordnetes Gleitlager pressen. Die Federn können hierbei durch eine Spannmutter in dem Lagergehäuse gehalten und an die Werkstückachse bzw. -welle gepresst werden.

Das Lagergehäuse kann vorteilhafterweise an dem Ende das näher zur Werkstückaufnahme angeordnet ist in Richtung der Werkstückaufnahme innen konisch zulaufen, wobei dann in diesem Bereich auch das Gleitlager angeordnet ist, wodurch die Werkstückachse bzw. -welle das Gleitlager in den konischen Zulauf des Lagergehäuses presst.

Zusätzlich kann zur Lagerung der Werkstückachse bzw. -welle in dem Lagergehäuse auch noch ein von dem Gleitlager beabstandetes Kugellager angeordnet sein.

Vorzugsweise handelt es sich bei der Antriebseinheit um einen Schrittmotor.

Bei der erfindungsgemäßen Anordnung zur Halterung und Drehung eines zu bearbeitenden Werkstücks kann nun die Werkstückachse bzw. -welle durch die Federn gegen ein in einem Lagergehäuse angeordnetes Gleitlager vorgespannt werden, so dass zum Einen die Werkstückachse bzw. -welle in dem Gleitlager gelagert ist und zum Anderen das Reibmoment hierbei höher ist als das bei der Bearbeitung auftretende Moment. Insgesamt ist es dadurch möglich, dass auf einen spielfreien Antrieb verzichtet werden kann.

Nachfolgend wird die Erfindung anhand von Ausführungsbeispielen und den beiliegenden Zeichnungen näher erläutert. Es zeigen:
- Figur 1: dreidimensionale Ansicht einer erfindungsgemäßen Anordnung zur Halterung und Drehung eines zu bearbeitenden Werkstücks;
- Figur 2: Querschnitt der in Figur 1 gezeigten erfindungsgemäßen Anordnung zur Halterung und Drehung eines zu bearbeitenden Werkstücks.

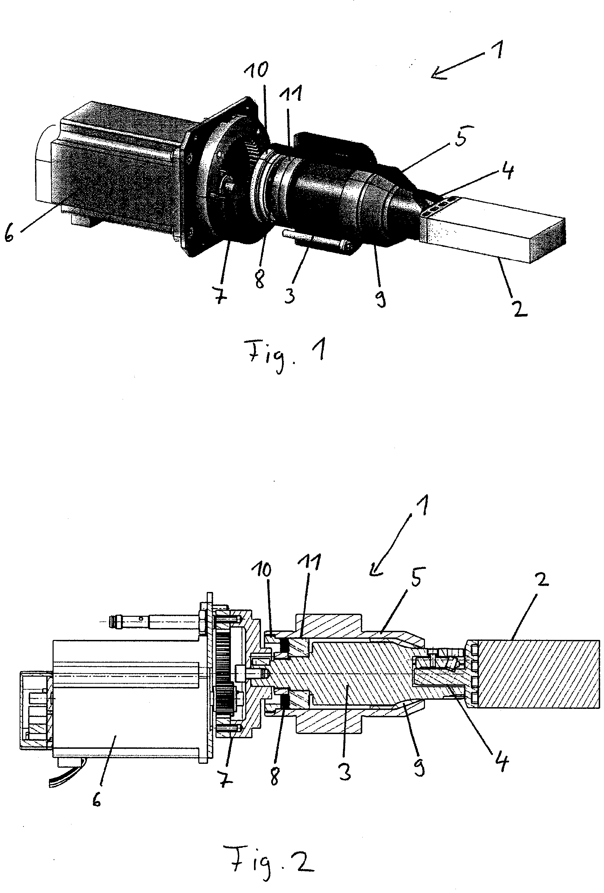

In den Figuren 1 und 2 ist eine erfindungsgemäße Anordnung 1 zur Halterung und Drehung eines zu bearbeitenden Werkstücks 2 gezeigt. Die Anordnung 1 besteht hierbei aus einer Antriebseinheit 6, bei der es sich beispielsweise um einen Schrittmotor handelt, einer Werkstückachse bzw. -welle 3 mit einer Werkstückaufnahme 4 zur Aufnahme des Werkstücks 2, einer Getriebeeinheit 7 und einem Lagergehäuse 5, in dem zumindest ein Großteil der Werkstückachse bzw. -welle 3 angeordnet ist.

Die Werkstückaufnahme 4 ist hierbei an einem Ende der Werkstückachse bzw. -welle 3 angeordnet. Am anderen Ende der Werkstückachse bzw. -welle 3 ist die Getriebeeinheit 7 und die Antriebseinheit 6 derart platziert, dass die Werkstückachse bzw. -welle 3 durch die Antriebseinheit 6 über die Getriebeeinheit 7 angetrieben bzw. gedreht werden kann.

Das Lagergehäuse 5 umgibt nun im Wesentlichen die Werkstückachse bzw. -welle 3, wobei bei der in den Figuren 1 und 2 gezeigten Ausführungsform der erfindungsgemäßen Anordnung das Lagergehäuse 5 etwas vor dem Ende der Werkstückachse bzw. -welle 3 an dem die Werkstückaufnahme 4 angeordnet ist endet. Das Lagergehäuse 5 läuft, wie den Figuren entnommen werden kann, in diesem Bereich und somit an dem Ende das näher zur Werkstückaufnahme 4 angeordnet ist in Richtung der Werkstückaufnahme 4 konisch zu, wobei auch die Werkstückachse bzw. -welle 3 einen entsprechenden konischen Zulauf in diesem Bereich aufweist. Zwischen dem Lagergehäuse 5 und der Werkstückachse bzw. -welle 3 ist in diesem Bereich desweiteren noch ein flächig angeordnetes Gleitlager 9 angeordnet, das aufgrund des konischen Zulaufs des Lagergehäuses 5 und der Werkstückachse bzw. -welle 3 ebenfalls einen im Wesentlichen konischen Zulauf aufweist.

Im Wesentlichen am anderen Ende der Werkstückachse bzw. -welle 3 sind nun ein Federpaket bzw. Federn 8 angeordnet, die die Werkstückachse bzw. -welle 3 gegen das Gleitlager 9 pressen, wodurch zum Einen das Gleitlager 9 gegen das Lagergehäuse 5 gepresst wird und zum Anderen die Werkstückachse bzw. -welle 3 in dem Gleitlager 9 gelagert wird. Im Einzelnen ist hierfür nun vorgesehen, dass die Werkstückachse bzw. -welle 3 eine Verjüngung im Bereich der Federn 8 aufweist, wobei zu Beginn der Verjüngung der Werkstückachse bzw. -welle 3 ein Kugellager 11 angeordnet ist, derart, dass die Federn 8 Druck auf das Kugellager 11 ausüben, das dann wiederum den Druck an die Werkstückachse bzw. -welle 3 weitergibt.

Zur sicheren Halterung und Fixierung der Federn 8 ist dann nach den Federn 8 noch eine Spannmutter 10 vorgesehen, die die Federn 8 entsprechend in dem Lagergehäuse 5 hält und gleichzeitig einen Anschlag für die Federn 8 bildet.

Durch diesen Aufbau wird nun erreicht, dass die Werkstückachse bzw. -welle 3 gegen das Gleitlager 9 gepresst wird und somit die Lagerung der Werkstückachse im Bereich des Gleitlagers 9 durch ein Reibmoment so stark vorgespannt ist, dass das Reibmoment höher ist als das bei der Bearbeitung auftretende Moment. Zusätzlich ist die Werkstückachse bzw. -welle 3 auch durch das Kugellager 11 gelagert. Insgesamt wird somit vermieden, dass ein federndes Verhalten der Antriebseinheit 6 auf die Werkstückachse bzw. -welle 3 übertragen wird, wodurch auf eine spielfreie Getriebeeinheit verzichtet werden kann.

Wie aus den Figuren desweitern noch hervorgeht, ist die Oberfläche des Gleitlagers 9 verhältnismäßig groß ausgestaltet, wodurch die Flächenpressung relativ gering ist. Da die Werkstückachse bzw. -welle 3 zusätzlich nur mit geringer Drehzahl angetrieben wird, ist die Wärmeerzeugung aufgrund der Reibleistung ebenfalls gering.

Zu den Federn 8 bzw. dem Federpaket ist noch anzumerken, dass durch diese Fertigungstoleranzen ausgeglichen werden können, ohne dass sich die Vorspannung merklich ändert.

## Patentansprüche

1. Anordnung (1) zur Halterung und Drehung eines zu bearbeitenden Werkstücks (2), aufweisend
● eine Werkstückachse bzw. -welle (3) mit einer Werkstückaufnahme (4),
● ein Lagergehäuse (5) in dem zumindest ein Großteil der Werkstückachse bzw. -welle (3) angeordnet ist,
● eine Antriebseinheit (6) und
● eine Getriebeeinheit (7),
wobei die Werkstückachse bzw. -welle (3) durch die Antriebseinheit (6) über die Getriebeeinheit (7) angetrieben bzw. gedreht werden kann,
**dadurch gekennzeichnet,**
**dass** die Werkstückachse bzw. -welle (3) in dem Lagergehäuse (5) derart vorgespannt ist, dass eine Übertragung eines federnden Verhaltens der Antriebseinheit (6) auf die Werkstückachse bzw. -welle (3) vermieden werden kann.

2. Anordnung nach Anspruch 1,
**dadurch gekennzeichnet,**
**dass** die Werkstückachse bzw. -welle (3) durch Federn (8) an ein in dem Lagergehäuse (5) angeordnetes Gleitlager (9) gepresst wird.

3. Anordnung nach Anspruch 2,
**dadurch gekennzeichnet,**
**dass** die Federn (8) durch eine Spannmutter (10) in dem Lagergehäuse (5) gehalten und an die Werkstückachse bzw. -welle (3) gepresst werden.

4. Anordnung nach einem der Ansprüche 2-3,
**dadurch gekennzeichnet,**
**dass** das Lagergehäuse (5) an dem Ende das näher zur Werkstückaufnahme (4) angeordnet ist in Richtung der Werkstückaufnahme (4) innen konisch zuläuft.

5. Anordnung nach Anspruch 4,
**dadurch gekennzeichnet,**
**dass** das Gleitlager (9) in dem Bereich in dem das Lagergehäuse (5) innen konisch zuläuft angeordnet ist.

6. Anordnung nach einem der Ansprüche 2-5,
**dadurch gekennzeichnet,**
**dass** zur Lagerung der Werkstückachse bzw. -welle (3) in dem Lagergehäuse (5) beabstandet von dem Gleitlager (9) ein Kugellager (11) angeordnet ist.

7. Anordnung nach einem der vorherigen Ansprüche,
**dadurch gekennzeichnet,**
**dass** es sich bei der Antriebseinheit (6) um einen Schrittmotor handelt.
